# FASCICULE DE BREVET EUROPEEN

(11) **EP 1 593 788 B1**
(45) Date de publication et mention de la délivrance du brevet: **09.05.2007**
(21) Numéro de dépôt: 05300340.6
(22) Date de dépôt: 29.04.2005
(51) Int. Cl.: E03F 5/22, F15C 3/06

(54) **Soupape ainsi que dispositif de sélection de voies de transfert d'un fluide sur un tronçon de réseau**
Ventil sowie Vorrichtung der Auswahl von Übergabegleisen einer Flüssigkeit auf einem Netzabschnitt
Valve and device of selection of ways for transfer of a fluid on a section of network

(30) Priorité: 05.05.2004 FR 0404818
(43) Date de publication de la demande: 09.11.2005
(73) Titulaire: SIMOP, 50390 Saint Sauveur Le Vicomte (FR)
(72) Inventeur: Ferey, Valéry, 14000 Caen (FR); Perez, Fabien, 50390 Rauville la Place (FR)
(74) Mandataire: Livet, Marie-José

(56) Documents cités:
- DE-A- 1 809 015
- DE-A- 4 234 704
- FR-A- 2 789 451
- US-A- 5 553 743
- US-A- 5 954 484

## Description

La présente invention concerne une soupape de sélection de voies de transfert d'un fluide sur un tronçon de réseau dans lequel il circule séquentiellement, par bâchées, du bas vers le haut.

Une telle soupape est adaptée au transfert d'un fluide quelconque, à titre d'exemple à l'évacuation d'eaux résiduaires clarifiées ou chargées en matières en suspension provenant d'un réservoir de stockage se vidangeant par bâchées telle que chasse mécanique ou poste de relevage.

Cette soupape peut se monter directement en sortie du réservoir de stockage, ou à n'importe quel niveau du réseau reliant ce réservoir au point de séparation des voies de transfert.

Il n'existe actuellement pas sur le marché de soupape du type susmentionné présentant l'avantage d'être compacte, facilement démontable pour permettre son entretien et en outre peu sensible aux risques de colmatage de façon à permettre son montage sur des réseaux d'eau fortement chargés.

La présente invention a pour objet de combler cette lacune.

Le document FR 2789451, par exemple, montre un dispositif de commande de l'orientation d'un fluide.

A cet effet, elle a pour objet une soupape de sélection de voies caractérisée en ce qu'elle est constituée :
- d'une part par un corps de préférence monobloc muni d'un orifice d'entrée ainsi que de deux orifices de sortie respectivement reliés à deux voies de transfert destinées à être alimentées successivement en fluide, et percé de galeries définissant une tubulure essentiellement en forme de huit renversé et gauche comportant quatre branches dont deux relient l'orifice d'entrée à un premier orifice de sortie et définissent ainsi une première paire de branches tandis que les deux autres relient l'orifice d'entrée au second orifice de sortie et définissent ainsi une seconde paire de branches, et
- d'autre part une bille ou boule ayant un diamètre sélectionné de façon à lui permettre de circuler librement dans la tubulure tout en étant bloquée à la partie interne du corps de préférence monobloc par des butées directement contiguës à l'orifice d'entrée et aux orifices de sortie et définissant des sièges permettant de bloquer les orifices de sortie et les voies de transfert.

Selon l'invention, le corps de préférence monobloc est conçu de sorte que lors de la libération d'une bâchée la bille ou boule soit entraînée par le flux de fluide et/ou la flottaison et se déplace dans une première branche de l'une des paires de branches jusqu'à venir en appui contre le siège associé de façon à bloquer l'une des voies de transfert puis retombe vers l'orifice d'entrée par la seconde branche de cette paire de branches sous l'action de sa gravité lors de l'interruption du flux, avant de se déplacer dans une première branche de l'autre paire de branches pour venir bloquer l'autre voie de transfert lors de la libération de la bâchée suivante et ainsi de suite.

Pour qu'une telle soupape puisse fonctionner il est essentiel que les premières branches de chaque paire de branches soient essentiellement obliques et que les secondes branches associées soient essentiellement verticales et respectivement situées au droit des orifices de sortie.

Il est également essentiel conformément à l'invention que le corps de préférence monobloc soit conçu de sorte que la bille ou boule ne puisse pas se déplacer dans la même paire de branches lors de la libération de deux bâchées successives.

Au cours de ce déplacement, la bille ou boule tourne constamment sur elle-même, permettant ainsi d'obtenir un auto décolmatage.

Selon l'invention, la bille ou boule vient donc alternativement en appui contre ses deux sièges pour obturer successivement l'une ou l'autre des deux voies de transfert.

Selon une autre caractéristique de l'invention, le corps de préférence monobloc comporte deux butées directement contiguës à l'orifice d'entrée et respectivement associées aux deux paires de branches de la tubulure.

Il est à noter que celle-ci peut avoir une section quelconque, à la condition que cette section soit adaptée au diamètre de la bille ou boule.

L'invention concerne également un dispositif de sélection de voies de transfert d'un fluide sur un tronçon de réseau comportant au moins deux soupapes du type susmentionné montées en série.

Un tel dispositif peut donc comporter un nombre quelconque de soupapes montées en série en fonction du nombre de voies à alimenter.

Il s'agit là d'un avantage essentiel de l'invention, lié à la conception de préférence monobloc et compacte de la soupape.

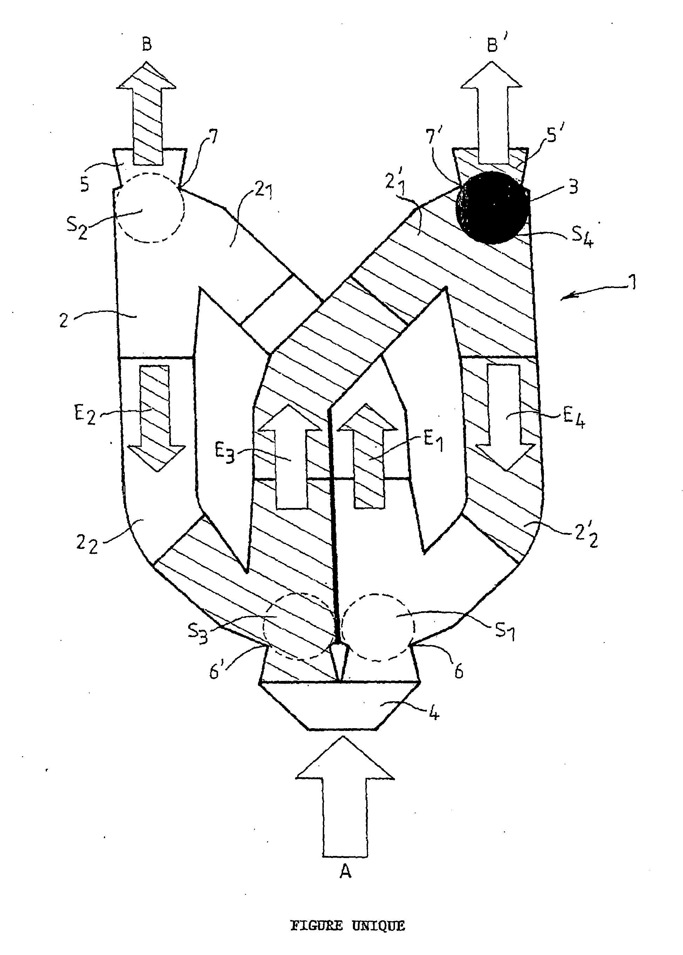

Les caractéristiques de la soupape ainsi que du dispositif qui font l'objet de l'invention seront décrites plus en détail en se référant à la figure annexée qui est un schéma représentant une soupape.

Selon la figure la soupape 1 est constituée par un corps de préférence monobloc percé de galeries définissant une tubulure 2 essentiellement en forme de huit renversé et gauche et comportant quatre branches 2₁, 2₂, 2'₁, 2'₂ dans lesquelles peut se déplacer une bille ou boule 3 ayant un diamètre adapté.

Le fluide à transférer circule séquentiellement, par bâchées, essentiellement du bas vers le haut au travers de la soupape 1 entre un orifice d'entrée 4 dans lequel il pénètre selon la flèche A et deux orifices de sortie 5, 5' par lesquels il sort selon les flèches B et B'.

Les orifices de sortie 5, 5' sont respectivement reliés à deux voies de transfert non représentées sur la figure qui sont destinées à être alimentées successivement en fluide.

Deux branches 2₁, 2₂ relient l'orifice d'entrée 4 au premier orifice de sortie 5 et définissent ainsi une première paire de branches tandis que les deux autres branches 2'₁, 2'₂ relient l'orifice d'entrée 4 au second orifice de sortie 5' et définissent ainsi une seconde paire de branches.

Les branches 2₁, 2'₁ sont essentiellement obliques alors que les branches 2₂, 2'₂ sont essentiellement verticales et situées au droit des orifices de sortie 5, 5'.

Comme représenté sur la figure le corps de préférence monobloc 1 comporte quatre épaulements 6, 6', 7, 7' dimensionnés de manière à définir des butées permettant de bloquer la bille ou boule 3 à la partie interne de la tubulure 2.

Les butées 6, 6' sont directement contiguës à l'orifice d'entrée 4 et respectivement associées aux deux paires de branches 2₁, 2₂, 2'₁, 2'₂ de la tubulure 2.

Chacune des butées 7, 7' est directement contiguë à l'un des orifices de sortie 5, 5' et associée à l'une des paires de branches 2₁, 2₂, 2'₁, 2'₂ de la tubulure 2.

Les butées 7, 7' définissent en outre des sièges permettant à la bille ou boule 3 d'obturer les orifices de sortie 5, 5' et les voies de transfert associées.

Le fonctionnement de la soupape 1 sera expliqué ci-dessous en considérant une position initiale S₁ schématisée en pointillés dans laquelle la bille ou boule 3 est en appui contre la butée 6 associée à la première paire de branches 2₁, 2₂.

A partir de cette position, lors de la libération d'une bâchée selon la flèche A la bille ou boule 3 est entraînée par le flux de fluide et/ou la flottaison et se déplace dans la branche oblique 2₁ selon la flèche E₁ jusqu'à venir dans la position S₂ schématisée en pointillés dans laquelle elle se trouve en appui contre le siège 7 de façon à obstruer l'orifice de sortie 5.

Le fluide pénétrant dans la soupape 1 selon la flèche A ne peut donc s'évacuer que par l'orifice de sortie 5' selon la flèche B'.

Lors de l'interruption du flux, la bille ou boule 3 se déplace selon la flèche E₂ dans la branche verticale 2₂ sous l'action de sa gravité jusqu'à venir en appui contre la butée 6' dans la position d'attente S₃ représentée en pointillés.

Lors de la libération de la bâchée suivante, la bille ou boule 3 est à nouveau entraînée par le flux de fluide pénétrant dans la soupape 1 par la flèche A et/ou la flottaison et se déplace alors selon la flèche E₃ dans la branche oblique 2'₁ jusqu'à venir dans la position S₄ représentée en noir dans laquelle elle est en appui contre le siège 7' de façon à obstruer l'orifice de sortie 5'.

Le fluide pénétrant dans la soupape 1 selon la flèche A ne peut alors s'évacuer que par l'orifice de sortie 5 selon la flèche B.

Lors de l'interruption du flux, la bille ou boule 3 se déplace selon la flèche E₄ dans la branche verticale 2'₂ sous l'effet de son propre poids jusqu'à venir se placer dans la position d'attente initiale S₁ dans laquelle elle est en appui contre la butée 6.

## Revendications

1. Soupape de sélection de voies de transfert d'un fluide sur un tronçon de réseau dans lequel il circule séquentiellement, par bâchées, du bas vers le haut
**caractérisée en ce qu'**
elle est constituée :
- d'une part par un corps de préférence monobloc (1) muni d'un orifice d'entrée (4) ainsi que de deux orifices de sortie (5, 5') respectivement reliés à deux voies de transfert destinées à être alimentées successivement en fluide, et percé de galeries définissant une tubulure (2) essentiellement en forme de huit renversé et gauche comportant quatre branches dont deux (2₁,2₂) relient l'orifice d'entrée (4) à un premier orifice de sortie (5) et définissent ainsi une première paire de branches tandis que les deux autres (2'₁, 2'₂) relient l'orifice d'entrée (4) au second orifice de sortie (5') et définissent ainsi une seconde paire de branches, et
- d'autre part une bille ou boule (3) ayant un diamètre sélectionné de façon à lui permettre de circuler librement dans la tubulure (2) tout en étant bloqué à la partie interne du corps de préférence monobloc (1) par des butées (6, 6' ; 7, 7') directement contiguës à l'orifice d'entrée (4) et aux orifices de sortie (5, 5') et définissant des sièges permettant de bloquer les orifices de sortie (5, 5') et les voies de transfert,
le corps de préférence monobloc (1) étant conçu de sorte que lors de la libération d'une bâchée la bille ou boule (3) soit entraînée par le flux de fluide et/ou la flottaison et se déplace dans une première branche (2₁, 2'₁) de l'une des paires de branches jusqu'à venir en appui contre le siège (7, 7') associé de façon à bloquer l'une des voies de transfert puis retombe vers l'orifice d'entrée (4) par la seconde branche (2₂, 2'₂) de cette paire de branches sous l'action de sa gravité lors de l'interruption du flux, avant de se déplacer dans une première branche (2₁, 2'₁) de l'autre paire de branches pour venir bloquer l'autre voie de transfert lors de la libération de la bâchée suivante et ainsi de suite, la bille ou boule (3) ne pouvant pas se déplacer dans la même paire de branches lors de la libération de deux bâchées successives.

2. Soupape selon la revendication 1,
**caractérisée en ce que**
les premières branches (2₁, 2'₁) de chaque paire de branches sont essentiellement obliques alors que les secondes branches (2₂, 2'₂) associées sont essentiellement verticales et respectivement situées au droit des orifices de sortie (5, 5').

3. Soupape selon l'une quelconque des revendications 1 et 2,
**caractérisée en ce que**
le corps de préférence monobloc (1) comporte deux butées (6, 6') directement contiguës à l'orifice d'entrée (4) et respectivement associées aux deux paires de branches de la tubulure (2).

4. Dispositif de sélection de voies de transfert d'un fluide sur un tronçon de réseau,
**caractérisé en ce qu'**
il comporte au moins deux soupapes selon l'une quelconques des revendications 1 à 3 montées en série.

## Claims

1. Valve for selecting routes for transferring a fluid on a network section in which it circulates sequentially via tanks from the bottom to the top,
**characterised in that**
it comprises:
- firstly, a preferably monobloc body (1) provided with an inlet orifice (4) and two outlet orifices (5, 5') respectively linked to two transfer routes designed to be supplied with fluid in succession, and having stages extending through it defining an intake (2) essentially in the shape of an overturned figure of eight and a port comprising four branches, two of which (2₁, 2₂) link the inlet orifice (4) to a first outlet orifice (5) and thus define a first pair of branches, whilst the other two (2'₁, 2'₂) link the inlet orifice (4) to the second outlet orifice (5') and thus define a second pair of branches, and
- secondly, a ball or bead (3) with a diameter selected so as to enable it to circulate freely through the intake (2) but block it at the internal part of the preferably monobloc body (1) by means of stops (6, 6'; 7, 7') directly contiguous with the inlet orifice (4) and the outlet orifices (5, 5'), and defining seats enabling the outlet orifices (5, 5') and the transfer routes to be shut off,
and the preferably monobloc body (1) is designed so that when a tank is released, the ball or bead (3) is driven by the flow of fluid and/or floatation and moves through a first branch (2₁, 2'₁) of one of the pairs of branches until it is supported against the co-operating seat (7, 7') in order to shut off one of the transfer routes and then drops back towards the inlet orifice (4) via the second branch (2₂, 2'₂) of this pair of branches under the effect of gravity when the flow is interrupted, before being moved through a first branch (2₁, 2'₁) of the other pair of branches into a position shutting off the other transfer route when the subsequent tank is released and so on, and the ball or bead (3) is not able to move through the same pair of branches during the release of two successive tanks.

2. Valve as claimed in claim 1,
**characterised in that**
the first branches (2₁, 2'₁) of each pair of branches are essentially oblique, whereas the second co-operating branches (2₂, 2'₂) are essentially vertical and disposed respectively flush with the outlet orifices (5, 5').

3. Valve as claimed in any one of claims 1 and 2,
**characterised in that**
the preferably monobloc body (1) has two stops (6, 6') directly contiguous with the inlet orifice (4) and respectively assigned to the two pairs of branches of the intake (2).

4. Device for selecting transfer routes for a fluid on a network section,
**characterised in that**
it comprises at least two valves as claimed in any one of claims 1 to 3 fitted in series.

## Patentansprüche

1. Ventil zur Auswahl von Fluidtransferwegen auf einem Netzabschnitt, in dem das Fluid sequenziell schubweise von unten nach oben strömt, **dadurch gekennzeichnet, dass** es
- zum einen durch einen vorzugsweise einstückig ausgebildeten Körper (1), der mit einer Eingangsöffnung (4) und zwei Ausgangsöffnungen (5, 5') versehen ist, die jeweils mit zwei Transferwegen verbunden sind, die dazu bestimmt sind, nacheinander mit Fluid gespeist zu werden, und durch den Gänge führen, die eine im Wesentlichen als umgedrehte und schiefe Acht ausgebildete Rohrleitung (2) mit vier Abschnitten bilden, von denen zwei (2₁, 2₂) die Eingangsöffnung (4) mit einer ersten Ausgangsöffnung (5) verbinden und somit ein erstes Abschnittenpaar definieren, während die zwei anderen (2'₁, 2'₂) die Eingangsöffnung (4) mit der zweiten Ausgangsöffnung (5') verbinden und somit ein zweites Abschnittenpaar definieren, und
- zum anderen durch eine Kugel bzw. einen Ball (3) mit einem Durchmesser, der derart ausgewählt ist, dass sie/er sich frei in der Rohrleitung (2) bewegen kann und dabei an dem internen Teil des vorzugsweise einstückig ausgebildeten Körpers (1) durch Anschläge (6, 6'; 7, 7') blockiert wird, die direkt an der Eingangsöffnung (4) und an den Ausgangsöffnungen (5, 5') angrenzen und Sitze definieren, die das Blockieren der Ausgangsöffnungen (5, 5') und der Transferwege ermöglichen,
gebildet ist, wobei der vorzugsweise einstückig ausgebildete Körper (1) derart ausgelegt ist, dass bei der Freigabe eines Schubs die Kugel bzw. der Ball (3) durch den Fluidfluss und/oder durch Flotation mitgenommen wird und sich in einem ersten Abschnitt (2₁, 2'₁) eines der Abschnittenpaare bewegt, bis sie/er gegen den zugeordneten Sitz (7, 7') derart zur Anlage kommt, dass einer der Transferwege blockiert wird, und anschließend unter der Einwirkung ihrer/seiner Schwerkraft bei der Unterbrechung des Flusses zu der Eingangsöffnung (4) hin über den zweiten Abschnitt (2₂, 2'₂) dieses Abschnittenpaars zurückfällt, bevor sie/er sich in einem ersten Abschnitt (2₁, 2'₁) des anderen Abschnittenpaars bewegt, um bei der Freigabe des nächsten Schubs den anderen Transferweg zu blockieren und so weiter, wobei die Kugel bzw. der Ball (3) sich bei der Freigabe zweier aufeinander folgender Stöße nicht in demselben Abschnittenpaar bewegen kann.

2. Ventil nach Anspruch 1, **dadurch gekennzeichnet, dass** die ersten Abschnitte (2₁, 2'₁) jedes Abschnittenpaars im Wesentlichen schräg sind, während die zugeordneten zweiten Abschnitte (2₂, 2'₂) im Wesentlichen vertikal sind und jeweils rechtwinkelig zu den Ausgangsöffnungen (5, 5') angeordnet sind.

3. Ventil nach einem der Ansprüche 1 und 2, **dadurch gekennzeichnet, dass** der vorzugsweise einstückig ausgebildete Körper (1) zwei Anschläge (6, 6') aufweist, die direkt an der Eingangsöffnung (4) angrenzen und jeweils den beiden Abschnittenpaaren der Rohrleitung (2) zugeordnet sind.

4. Vorrichtung zur Auswahl von Fluidtransferwegen auf einem Netzabschnitt, **dadurch gekennzeichnet, dass** sie mindestens zwei in Serie eingebaute Ventile nach einem der Ansprüche 1 bis 3 aufweist.
